# FASCICULE DE BREVET EUROPEEN

(11) **EP 0 949 878 B1**
(45) Date de publication et mention de la délivrance du brevet: **26.03.2003**
(21) Numéro de dépôt: 97954484.8
(22) Date de dépôt: 31.12.1997
(51) Int. Cl.: A47J 43/08, A47J 19/02

(54) **PRESSOIR POUR PRODUITS ALIMENTAIRES, TELS QUE FRUITS OU LEGUMES, ET ROBOT DE CUISINE COMPORTANT UN TEL PRESSOIR**
PRESSVORRICHTUNG FÜR NAHRUNGSMITTEL, WIE FRÜCHTE ODER GEMÜSE, UND KÜCHENGERÄT MIT EINER SOLCHEN PRESSVORRICHTUNG
PRESS FOR FOOD PRODUCTS, SUCH AS FRUITS OR VEGETABLES, AND KITCHEN ROBOT COMPRISING SUCH A PRESS

(30) Priorité: 03.01.1997 FR 9700029
(43) Date de publication de la demande: 20.10.1999
(73) Titulaire: MOULINEX S.A., 75008 Paris (FR)
(72) Inventeur: DESCHAMPS, Joel, F-53100 Mayenne (FR); MARRIERE, Marc, F-53300 Ambrières les Vallées (FR)
(74) Mandataire: Busquets, Jean-Pierre
(86) Numéro de dépôt international: FR9702468
(87) Numéro de publication internationale: WO98029016

(56) Documents cités:
- EP-A- 0 570 691
- CH-A- 415 986
- DE-B- 1 250 071

## Description

La présente invention se rapporte à un pressoir, notamment à usage domestique, pour des produits alimentaires, tels que des fruits ou des légumes destinés à être réduits en purée, et qui est destiné, notamment mais non exclusivement, à être monté sur un appareil électroménager dit robot de cuisine qui, par fixation d'outils divers tels que couteaux, disques râpeurs, disques éminceurs, etc. sur l'arbre d'un moteur électrique, permet de réaliser des préparations culinaires variées.

Elle concerne, plus précisément, un pressoir de ce genre comportant un bol de travail fermé par un couvercle amovible et renfermant un outil presseur rotatif comprenant un arbre vertical central qui porte au moins une pale de pressage dont le bord extérieur s'étend vers la paroi latérale du bol, et qui est accouplé en rotation à un arbre d'entraînement d'un groupe moteur au moyen d'un dispositif d'accouplement, ladite pale étant maintenue en contact contre un tamis fixe sous l'action d'un ressort de rappel associé à l'arbre porte-pale de manière à provoquer, en tournant, le pressage et le passage des produits alimentaires au travers du tamis, et l'ensemble formé par la pale et l'arbre qui la porte étant en outre adapté, dans le cas où la pale rencontre un corps dur, à se soulever à l'encontre du ressort de rappel.

On entend par corps dur un corps qui présente une résistance anormalement élevée, comme par exemple un gros noyau d'abricot lors de la confection d'un nectar d'abricot.

Dans un pressoir connu de ce genre, il arrive qu'en cas d'introduction d'un corps dur dans les produits à passer, ce corps dur, lors du pressage, vienne se coincer latéralement entre le bord extérieur de la pale et la paroi latérale du bol de travail, provoquant alors l'immobilisation de la pale, et partant, un échauffement anormal du moteur qui risque alors de se détériorer.

Pour supprimer ce risque, on a déjà proposé d'agencer dans le circuit d'alimentation du moteur un dispositif de protection thermique, par exemple du type capteur thermostatique, adapté à couper l'alimentation du moteur lorsque sa température détectée dépasse un seuil donné. Toutefois, un tel dispositif de protection thermique est particulièrement coûteux, encombrant et requiert un réglage précis difficile à obtenir.

L'invention a notamment pour but de remédier à ces inconvénients et de réaliser à moindre coût un pressoir, du type exposé ci-dessus, qui permette d'une manière simple d'empêcher toute détérioration du groupe moteur par suite du coincement latéral de la pale dû à un corps dur introduit dans les produits à passer.

Selon l'invention, le dispositif d'accouplement de l'arbre porte-pale de l'outil presseur avec l'arbre d'entraînement du groupe moteur constitue également un dispositif apte à désaccoupler l'arbre porte-pale dudit arbre d'entraînement lorsque l'ensemble formé par la pale et l'arbre porte-pale se soulève.

Grâce à ce dispositif d'accouplement servant aussi à désaccoupler l'arbre porte-pale de l'arbre du groupe moteur à chaque soulèvement de l'arbre porte-pale consécutif à la rencontre d'un corps dur par la pale, on réalise désormais une protection mécanique du moteur, et non plus une protection thermique comme dans l'art antérieur, qui s'avère simple et fiable, permettant ainsi de réaliser un appareil pressoir offrant une garantie optimale de sécurité.

Dans une réalisation préférentielle de l'invention, le dispositif d'accouplement-désaccouplement de l'arbre porte-pale de l'outil presseur par rapport à l'arbre d'entraînement du groupe moteur est constitué par un dispositif de crabotage débrayable.

L'invention vise également un robot de cuisine, du type comportant un boîtier renfermant un groupe moteur et présentant une région formant une embase hors de laquelle l'arbre d'entraînement du groupe moteur fait verticalement saillie, et sur laquelle est monté amovible un pressoir selon l'invention.

Les caractéristiques et avantages de l'invention ressortiront d'ailleurs de la description qui va suivre, à titre d'exemple non limitatif, en référence aux dessins annexés dans lesquels :
- la figure 1 est une vue en coupe verticale d'un pressoir selon l'invention monté sur un robot de cuisine, l'outil presseur étant représenté en position d'accouplement avec l'arbre d'un groupe moteur ;
- la figure 2 est une vue analogue à la figure 1, montrant l'outil presseur en position de désaccouplement de l'arbre du groupe moteur ;
- la figure 3 est une vue en perspective éclatée, à plus petite échelle, des divers constituants du pressoir selon l'invention, avant montage dans un bol de travail ;
- la figure 4 est un schéma d'un développé partiel, à échelle agrandie, de l'ensemble formé par un arbre de l'outil presseur et une bague intermédiaire, et illustré en une position de crabotage ; et
- la figure 5 est une représentation analogue à celle de la figure 4, mais pour laquelle l'ensemble arbre-bague est en position de décrabotage.

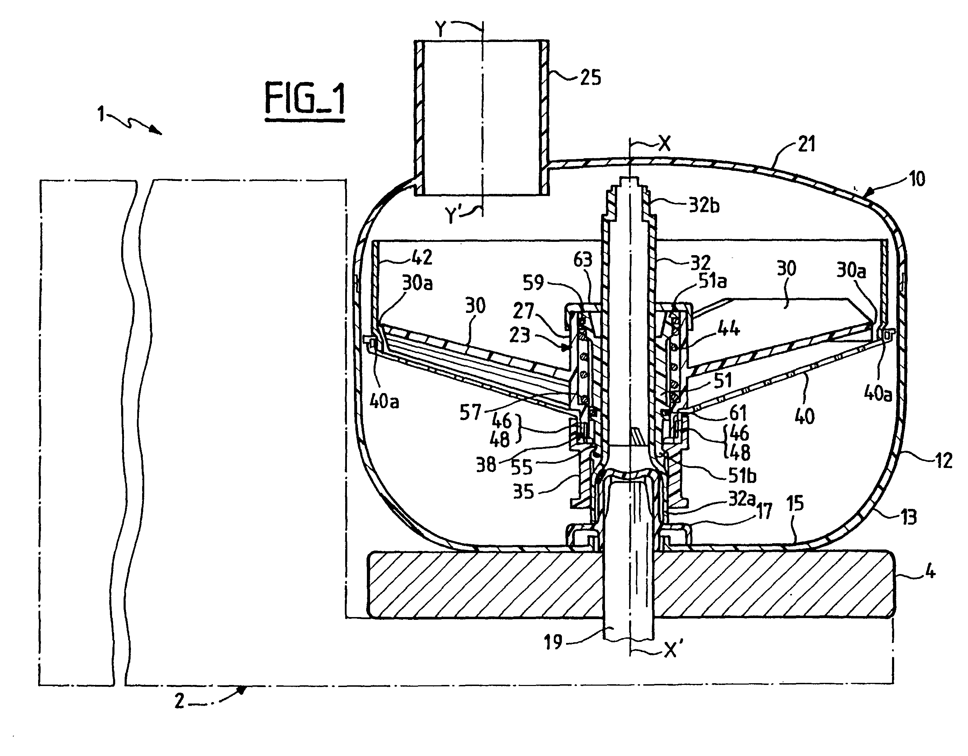

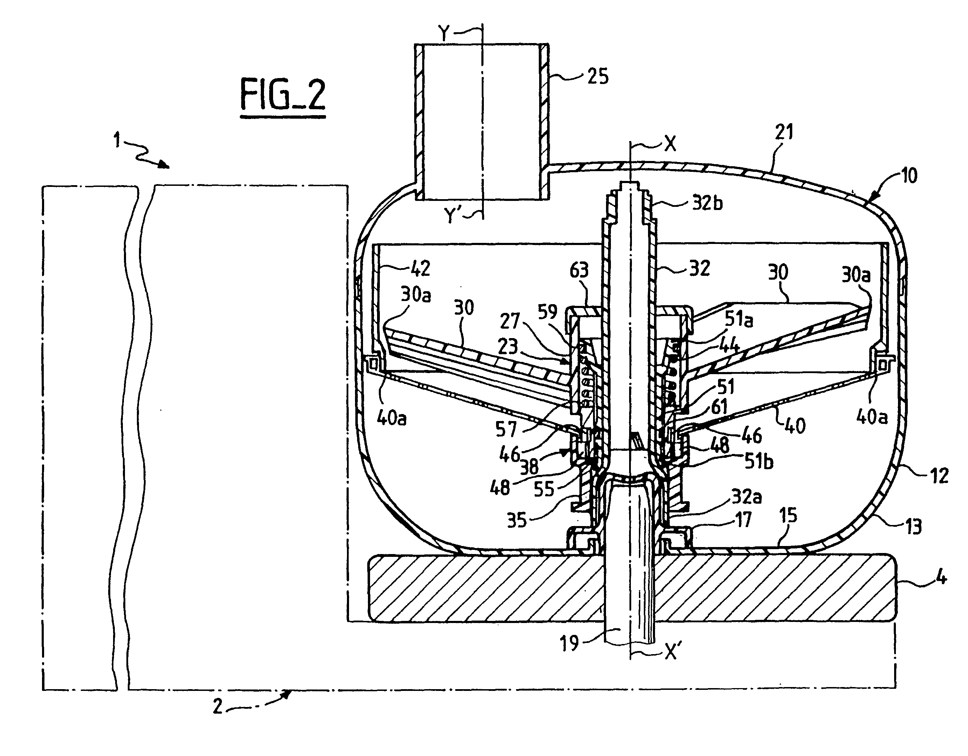

Comme représenté aux figures 1 et 2, un robot culinaire 1 comporte un boîtier 2 (illustré schématiquement en traits mixtes) ayant une forme générale de L qui renferme un groupe moteur (non figuré) et qui présente une région formant embase 4 sur laquelle est monté amovible, en tant qu'accessoire, un pressoir 10 destiné à broyer et passer des produits alimentaires, tels que des fruits ou des légumes, de manière à les réduire en purée dans le but de confectionner des purées, par exemple de pommes de terre, des coulis ou encore des nectars.

Dans l'exemple de réalisation illustré à la figure 1, le pressoir 10 comporte un bol ou récipient de travail 12 présentant une paroi latérale 13 de forme générale approximativement cylindrique à axe vertical central XX', et une paroi de fond horizontale 15 surmontée d'une monture centrale verticale 17 solidaire en rotation d'un arbre de sortie ou d'entraînement 19 du groupe moteur qui fait verticalement saillie de l'embase 4.

Le bol de travail 12 est fermé par un couvercle amovible 21 et renferme un outil presseur rotatif 23 qui est adapté à s'accoupler avec l'arbre d'entraînement 19 du groupe moteur via la monture 17.

Le couvercle 21 comprend une trémie ou tube d'alimentation 25 qui présente un axe vertical YY' excentré par rapport à l'axe XX' du bol 12, et dans lequel sont introduits les produits alimentaires à passer.

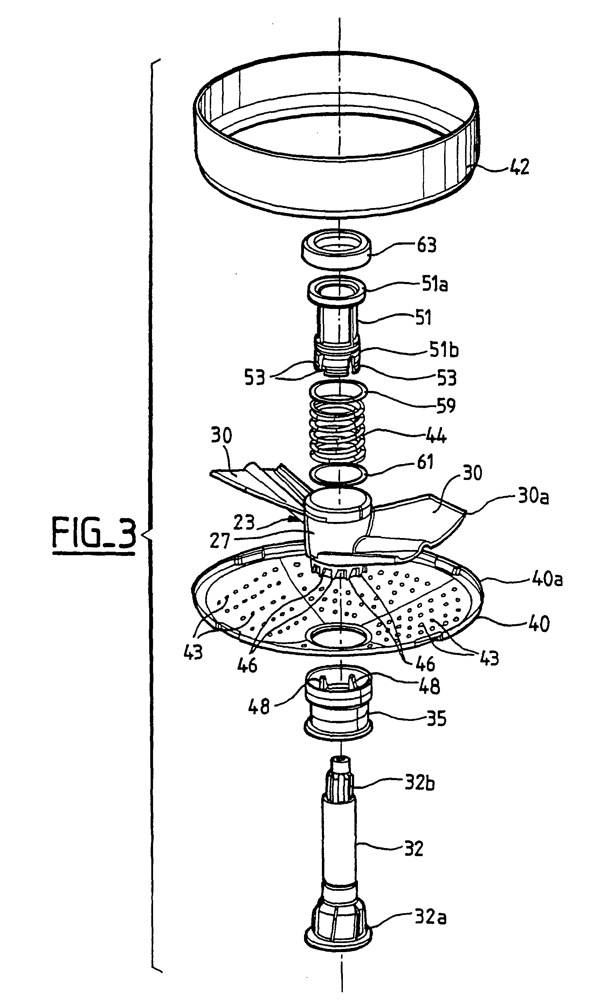

L'outil presseur 23, mieux visible à la figure 3, comprend un arbre cylindrique vertical 27, présentement creux, portant au moins une pale profilée de pressage 30, ici au nombre de deux diamétralement opposées. De préférence, l'outil presseur 23 est moulé d'une seule pièce en une matière plastique propre au contact alimentaire. Comme le montre la figure 1, l'arbre porte-pales 27 de l'outil presseur 23 s'étend suivant l'axe XX' et est accouplé en rotation à un arbre d'entraînement vertical creux 32 solidaire en rotation de la monture 17, par l'intermédiaire d'une bague cylindrique coaxiale 35.

Dans l'exemple de réalisation illustré à la figure 1, l'arbre 32 traverse coaxialement l'arbre porte-pales 27 et présente une partie d'extrémité inférieure 32a qui est engagée en accouplement sur la monture 17, et qui entraîne en rotation la bague 35 accouplée à l'arbre porte-pales 27 au moyen d'un dispositif d'accouplement 38, et une partie d'extrémité supérieure 32b qui est conformée en un entraîneur recevant, éventuellement, un disque (non figuré) de râpage préalable des produits alimentaires.

En regard de la figure 1, un tamis fixe 40 est monté interposé entre l'arbre porte-pales 27 et la bague 35, et présente un bord extérieur circulaire 40a, mieux visible à la figure 3, qui s'étend jusqu'au voisinage de la paroi latérale 13 du bol 12, et qui porte de façon amovible une jupe cylindrique 42 s'étendant vers le haut. Le tamis 40, figure 3, est réalisé à partir d'une tôle perforée dont les perforation 43 sont calibrées en fonction du type de préparation souhaité.

Comme le montre la figure 1, les pales 30, dont le bord extérieur respectif 30a s'étend jusqu'à proximité de la jupe 42, sont maintenues chacune en contact contre le fond du tamis 40 sous l'action d'un ressort de rappel 44 associé à l'arbre porte-pales 27 de manière à provoquer, en tournant, le pressage et le passage des produits alimentaires au travers du tamis 40.

Selon l'invention, le dispositif d'accouplement 38 de l'arbre porte-pales 27 avec la bague intermédiaire 35 liée en rotation à l'arbre d'entraînement 19 du groupe moteur (figure 1), constitue également un dispositif apte à désaccoupler l'arbre porte-pales 27 de la bague 35, donc dudit arbre d'entraînement 19, lorsque l'ensemble formé par les pales 30 et l'arbre porte-pales 27 se soulève à l'encontre du ressort de rappel 44 (figure 2) par suite de la venue en contact, lors du pressage, d'un corps dur sur l'une des pales 30.

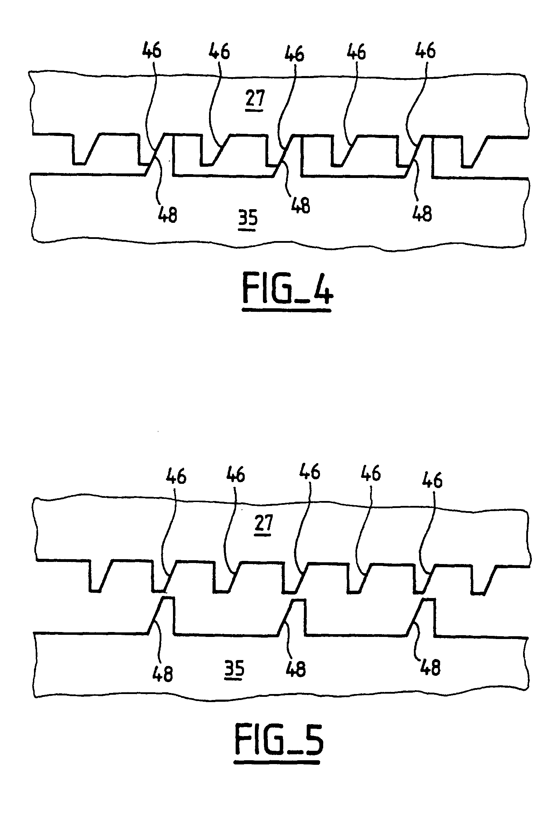

Dans une forme de réalisation préférée de l'invention, ce dispositif d'accouplement-désaccouplement 38 de l'arbre porte-pales 27 par rapport à l'arbre d'entraînement 19 du groupe moteur est constitué par un dispositif de crabotage débrayable. A cet effet, la base de l'arbre porte-pales 27 comporte une première série de dents espacées 46, mieux visibles à la figure 3, pratiquées sur le pourtour externe dudit arbre 27 en étant dirigées vers le bas, et qui sont destinées soit à venir en prise avec une seconde série de dents espacées 48, mieux visibles à la figure 3, dirigées vers le haut et ménagées sur le pourtour interne de la bague 35, lorsque l'arbre porte-pales 27 et la bague 35 sont accouplés l'un à l'autre dans une position de crabotage (figures 1 et 4), soit à se séparer des dents 48 lorsque l'arbre porte-pales 27 et la bague 35 sont désaccouplés l'un de l'autre dans une position de décrabotage ou de débrayage (figures 2 et 5) par suite d'un soulèvement de l'arbre porte-pales 27 à l'encontre du ressort 44, comme illustré à la figure 2, consécutivement à la rencontre d'un corps dur par l'une des pales 30.

Dans cette forme de réalisation, figure 1, une pièce formant fût cylindrique 51 est montée coaxialement dans l'arbre porte-pales 27, autour de l'arbre 32, et présente une partie d'extrémité supérieure conformée en un anneau 51a et une partie d'extrémité inférieure 51b qui fait saillie de l'arbre porte-pales 27 et qui est solidaire en rotation de la bague 35, par exemple au moyen de pattes 53 (figure 3) venant s'encliqueter sous un rebord circulaire 55 (figure 1) formé à l'intérieur de la bague 35. Comme le montre la figure 1, le ressort 44 est un ressort à boudin taré qui est monté coaxialement autour du fût 51, dont une extrémité est en appui contre l'anneau 51a du fût 51, et dont l'autre extrémité est en appui contre un épaulement annulaire 57 formé sur la face interne de l'arbre porte-pales 27.

Sur les figures 1 et 3, on a désigné en 59 et 61 deux rondelles venant s'engager sur le fût 51, et en 63 une couronne formant un chapeau destiné à être fixé sur la partie supérieure de l'arbre porte-pales 27 par tout moyen de fixation approprié, après montage des différentes pièces dans cet arbre porte-pales.

Pour réaliser, par exemple, un nectar d'abricot, on introduit dans la trémie 25 les abricots qui tombent sur le tamis 40 et qui sont entraînés en rotation dans la jupe 42, par les pales 30 solidaires de l'arbre 27 dont les dents 46 sont en prise par crabotage avec les dents 48 de la bague 35 liée en rotation à l'arbre d'entraînement 19 du groupe moteur, voir figures 1 et 4. Les abricots sont pressés contre le tamis 40 par les pales 30 dont l'arbre 27, lorsque l'une des pales 30 rencontre un noyau d'abricot, se soulève à l'encontre du ressort 44, sur une hauteur prédéterminée par tarage du ressort 44, de manière que les dents 46 de l'arbre 27 se dégagent par décrabotage, en produisant un petit cliquètement, des dents 48 de la bague 35, de sorte que l'arbre porte-pales 27 se trouve désaccouplé de l'arbre d'entraînement 19 du groupe moteur, voir figures 2 et 5. Après passage de la pale 30 au-dessus du noyau, l'arbre porte-pales 27 est rappelé par le ressort 44 dans sa position de crabotage telle que montrée à la figure 1. La masse pressée est poussée au travers du tamis 40, produisant ainsi un nectar d'abricot qui s'écoule dans le fond du bol 12.

Si au cours du pressage des abricots, un gros noyau vient se coincer entre le bord extérieur 30a de l'une des pales 30 et la paroi latérale de la jupe 42, les dents 46 de l'arbre porte-pales 27 remontent le long des dents correspondantes 48 de la bague en rotation 35 de sorte que l'arbre 27 se soulève, et viennent alors se dégager par décrabotage des dents 48 de la bague 35 (figures 2 et 5), ce qui provoque le désaccouplement de l'arbre 27 de l'arbre d'entraînement 19 du groupe moteur. Grâce à ce désaccouplement mécanique consécutif au coincement de la pale par le noyau d'abricot, on évite ainsi toute détérioration du groupe moteur. Après arrêt de l'appareil et retrait du noyau coinçant la pale, l'arbre porte-pales 27 est rappelé par le ressort 44 dans sa position de crabotage telle que montrée à la figure 1, et la confection du nectar d'abricot est alors poursuivie.

## Revendications

1. Pressoir pour produits alimentaires, tels que des fruits ou des légumes destinés à être réduits en purée, comportant un bol de travail (12) fermé par un couvercle amovible (21) et renfermant un outil presseur rotatif (23) comprenant un arbre vertical central (27) qui porte au moins une pale de pressage (30) dont le bord extérieur s'étend vers la paroi latérale du bol (12), et qui est accouplé en rotation à un arbre d'entraînement (19) d'un groupe moteur au moyen d'un dispositif d'accouplement (38), ladite pale (30) étant maintenue en contact contre un tamis (40) fixe sous l'action d'un ressort de rappel (44) associé à l'arbre porte-pale (27) de manière à provoquer, en tournant, le pressage et le passage des produits alimentaires au travers du tamis, et l'ensemble formé par la pale (30) et l'arbre (27) qui la porte étant en outre adapté, dans le cas où la pale (30) rencontre un corps dur, à se soulever à l'encontre du ressort de rappel (44),
**caractérisé en ce que** le dispositif (38) d'accouplement de l'arbre porte-pale (27) de l'outil presseur (23) avec l'arbre d'entraînement (19) du groupe moteur est apte à désaccoupler l'arbre porte-pale (27) dudit arbre d'entraînement (19)lorsque l'ensemble formé par la pale (30) et l'arbre porte-pale (27) se soulève.

2. Pressoir selon la revendication 1,
**caractérisé en ce que** le dispositif d'accouplement-désaccouplement (38) de l'arbre porte-pale (27) de l'outil presseur (23) par rapport à l'arbre d'entraînement (19) du groupe moteur est constitué par un dispositif de crabotage débrayable.

3. Pressoir selon la revendication 2,
**caractérisé en ce que** le dispositif de crabotage (38) comporte une première série de dents (46) espacées, pratiquées sur le pourtour externe de l'arbre porte-pale (27), à la base de celui-ci, dirigées vers le bas et venant en prise avec une seconde série de dents (48) espacées, dirigées vers le haut et ménagées sur le pourtour interne d'une bague intermédiaire cylindrique (35) coaxiale à l'arbre porte-pale (27) et liée en rotation à l'arbre d'entraînement (19) du groupe moteur.

4. Pressoir selon la revendication 3,
**caractérisé en ce que** l'arbre porte-pale (27) étant un arbre cylindrique creux, une pièce formant un fût cylindrique (51) est monté coaxialement dans l'arbre porte-pale (27) et présente une partie d'extrémité inférieure (51b) qui fait saillie dudit arbre porte-pale et qui est solidaire en rotation de la bague (35), et le ressort de rappel (44) est un ressort à boudin taré qui est monté coaxialement autour dudit fût (51), dont une extrémité est en appui contre un anneau (51a) formé à la partie d'extrémité supérieure du fût (51), et dont l'autre extrémité est en appui contre un épaulement annulaire (57) formé sur la face interne de l'arbre porte-pale (27).

5. Pressoir selon l'une quelconque des revendications précédentes,
**caractérisé en ce que** le tamis (40) présente un bord extérieur circulaire (40a) portant une jupe cylindrique (42) qui s'étend vers le haut et qui est interposée entre la paroi latérale (13) du bol (12) et le bord extérieur (30a) de la pale (30).

6. Robot de cuisine, comportant un boîtier (2) renfermant un groupe moteur et présentant une région formant une embase (4) hors de laquelle l'arbre d'entraînement (19) du groupe moteur fait verticalement saillie,
**caractérisé en ce que** sur l'embase (4) du boîtier (2) est monté amovible un pressoir (10) tel que défini selon l'une quelconque des revendications précédentes.

## Claims

1. A liquidiser for food products, such as fruits or vegetables to be reduced to purée, comprising a work bowl (12) closed by a removable cover (21) and containing a rotatable liquidising tool (23) having a vertical central spindle (27) which carries at least one liquidising blade (30), the outer edge of which extends towards the side wall of the bowl (12), and which is coupled in rotation to a drive shaft (19) of a drive unit by means of a coupling device (38), the said blade being held in contact against a fixed strainer (40) by a return spring (44) associated with the blade-carrying spindle (27), whereby, in rotating, to cause food products to be liquidised and passed through the strainer (40), and the assembly formed by the blade (30) and the spindle (27) carrying it being further adapted so that, in the event of the blade (30) meets a hard body, the said assembly rises against the return spring (44), **characterised in that** the coupling device (38) of the blade-carrying spindle (27) of the liquidising tool (23), with the drive shaft (19) of the drive unit, is adapted to uncouple the blade-carrying spindle (27) from the said drive shaft (19) when the assembly formed by the blade (30) and the blade-carrying spindle (27) rises.

2. A liquidiser according to claim 1, **characterised in that** the device (38) for coupling and uncoupling the blade-carrying spindle (27) of the liquidising tool (23) with respect to the drive shaft (19) of the drive unit is a releasable dog clutch device.

3. A liquidiser according to claim 2, **characterised in that** the dog clutch device (38) comprises a first set of teeth (46) spaced apart, formed on the outer perimeter of the blade-carrying spindle (27), at the base of the latter, and being directed downwards for engagement with a second set of teeth (48) which are spaced apart, directed upwards and formed on the inner perimeter of a cylindrical intermediate sleeve (35) which is coaxial with the blade-carrying spindle (27) and coupled in rotation to the drive shaft (19) of the drive unit.

4. A liquidiser according to claim 3, **characterised in that** the blade-carrying spindle (27) being a hollow cylindrical shaft, a member defining a cylindrical sleeve element (51) is mounted coaxially in the blade-carrying spindle (27) and has a lower end portion (51b) which projects from the said blade-carrying spindle and which is coupled in rotation to the sleeve (35), and the return spring (44) is a precompressed coil spring which is mounted coaxially around the said sleeve element (51), one end of which is in engagement against a ring (51a) arranged at the upper end portion of the sleeve element (51), with its other end in engagement against an annular shoulder (57) formed on the internal face of the blade-carrying spindle (27).

5. A liquidiser according to anyone of the preceding claims, **characterised in that** the strainer (40) has a circular outer edge (40a) carrying a cylindrical skirt (42) which extends upwards and which is interposed between the side wall (13) of the bowl (12) and the outer edge (30a) of the blade (30).

6. A kitchen appliance comprising a casing (2) enclosing a drive unit and having a region defining a base (4), out of which the drive shaft (19) of the drive unit projects vertically, **characterised in that** a liquidiser according to anyone of the preceding claims is mounted removably on the base (4) of the casing (2).

## Patentansprüche

1. Pressvorrichtung für Nahrungsmittelprodukte wie Früchte oder Gemüse, die zu Püree zerkleinert werden sollen, mit einer Arbeitsschüssel (12), die durch einen abnehmbaren Dekkel (21) verschlossen ist und ein drehbares Presswerkzeug (23) umschließt, das eine vertikale Mittelwelle (27) aufweist, die mindestens eine Pressschaufel (30) trägt, deren Außenrand sich in Richtung auf die Seitenwand der Schüssel (12) erstreckt und die mittels einer Kupplungsvorrichtung (38) drehfest mit einer Antriebswelle (19) eines Antriebsaggregats gekuppelt ist, wobei die Schaufel (30) unter der Wirkung einer zur Schaufelträgerwelle (27) gehörenden Rückstellfeder (44) in Berührung gegen ein feststehendes Sieb (40) gehalten wird, um beim Drehen das Pressen und Passieren der Nahrungsmittelprodukte durch das Sieb zu bewirken, und wobei die von der Schaufel (30) und der sie tragenden Welle (27) gebildete Anordnung außerdem so ausgebildet ist, daß sie sich gegen die Rückstellfeder (44) hebt, wenn die Schaufel (30) auf einen harten Körper trifft, **dadurch gekennzeichnet, daß** die Kupplungsvorrichtung (38) zum Kuppeln der Schaufelträgerwelle (27) des Presswerkzeugs (23) mit der Antriebswelle (19) des Antriebsaggregats dafür eingerichtet ist, die Schaufelträgerwelle (27) von der Antriebswelle (19) auszukuppeln, wenn die von der Schaufel (30) und der Schaufelträgerwelle (27) gebildete Anordnung sich hebt.

2. Pressvorrichtung nach Anspruch 1, **dadurch gekennzeichnet, daß** die Kuppel-Auskuppelvorrichtung (38) der Schaufelträgerwelle (27) des Presswerkzeugs (23) bezüglich der Antriebswelle (19) des Antriebsaggregats aus einer ausrückbaren Klauenkupplung besteht.

3. Pressvorrichtung nach Anspruch 2, **dadurch gekennzeichnet, daß** die Klauenkupplungsvorrichtung (38) eine erste Reihe von in einem Abstand voneinander angeordneten Zähnen (46) aufweist, die am Außenumfang der Schaufelträgerwelle (27) ausgebildet sind, an deren Basis, nach unten gerichtet und dazu bestimmt, daß sie in Eingriff mit einer zweiten Reihe von in Abstand voneinander angeordneten Zähnen (48) kommen, die nach oben gerichtet und am Innenumfang eines zylindrischen Zwischenringes (35) ausgebildet sind, der mit der Schaufelträgerwelle (27) koaxial und mit der Antriebswelle (19) des Antriebsaggregats drehfest verbunden ist.

4. Pressvorrichtung nach Anspruch 3, **dadurch gekennzeichnet, daß** die Schaufelträgerwelle (27) eine hohle zylindrische Welle ist und ein Teil, das einen zylindrischen Schaft (51) bildet, koaxial in der Schaufelträgerwelle (27) montiert ist und einen unteren Endabschnitt (51) aufweist, der von der Schaufelträgerwelle vorspringt und drehfest mit dem Ring (35) ist, und daß die Rückstellfeder (44) eine geeichte Schraubenfeder ist, die koaxial um den Schaft (51) montiert ist und von der ein Ende gegen einen am oberen Ende des Schaftes (51) gebildeten Ring (51a) und das andere Ende gegen eine an der Innenseite der Schaufelträgerwelle (27) ausgebildete Schulter andrückt.

5. Pressvorrichtung nach einem der vorangehenden Ansprüche, **dadurch gekennzeichnet, daß** das Sieb (40) einen kreisförmigen Außenrand (40a) aufweist, der eine zylindrische Schürze (42) trägt, die sich nach oben erstreckt und zwischen der Seitenwand (13) der Schüssel (12) und dem Außenrand (30a) der Schaufel (30) angeordnet ist.

6. Universalküchenmaschine (Robot) mit einem Gehäuse (2), das ein Antriebsaggregat umschließt und einen Bereich aufweist, der eine Basis (4) bildet, aus der die Antriebswelle (19) des Antriebsaggregats vertikal vorsteht, **dadurch gekennzeichnet, daß** auf der Basis (4) des Gehäuses (2) abnehmbar eine Pressvorrichtung (10) wie in einem der vorangehenden Ansprüche definiert montiert ist.
